# EUROPEAN PATENT SPECIFICATION

(11) **EP 2 618 543 B1**
(45) Date of publication and mention of the grant of the patent: **10.09.2014**
(21) Application number: 12193977.1
(22) Date of filing: 23.11.2012
(51) Int. Cl.: H04L 29/08

(54) **Information sending method and device**
Verfahren und Gerät zum Senden von Information
Procédé et dispositif pour envoyer des informations

(30) Priority: 20.01.2012 CN 201210018962
(43) Date of publication of application: 24.07.2013
(73) Proprietor: Huawei Device Co., Ltd., Longgang District Shenzhen Guangdong 518129 (CN)
(72) Inventor: Ding, Long, 518129 Shenzhen (CN)
(74) Representative: Körber, Martin Hans

(56) References cited:
- US-A1- 2006 218 040
- US-A1- 2011 082 939
- US-A1- 2011 149 806
- US-A1- 2011 173 248

## Description

### FIELD OF THE INVENTION

The present invention relates to the field of communications technologies, and in particular, to an information sending method, and device.

### BACKGROUND OF THE INVENTION

As a consumption demand of people increases, many sites with a large scale and a complicated pattern emerge. With guidance of paper and an electronic file, a user still needs to spend certain time looking for required information, which wastes time and energy.

At present, in order to facilitate finding of required information of a user, an information guidance service based on the Internet or a positioning function emerges. For example, a server sends information that needs to be guided to a user equipment through a network, or the user equipment positions, through the positioning function, information that needs to be found. However, these guidance services need to depend on consumption of date service traffic or positioning accuracy of the user equipment.

US 2011/082939 A1 relates to a method for peer-to-peer communication. The method includes receiving first set of information containing capabilities for a peer-to-peer communication. The method further includes communicating the first information to facilitate a peer-to-peer communication. The method includes utilizing a intermediary node to convey the capabilities and to further update the information/capabilities as the information changes over time (see abstract). FIG. 14 depicts an example message flow diagram representative of communications between wireless terminals via a wireless access point to discover each other's P2P capabilities and establish a P2P connection.

### SUMMARY OF THE INVENTION

Embodiments of the present invention provide an information sending method, system, and device, so that information guidance does not depend on consumption of data service traffic or positioning accuracy of a user equipment.

An embodiment of the present invention provides an information sending method, including:
sending, by a control point, a connection request to a target user equipment, where the connection request includes a guidance identifier, so as to request the target user equipment to receive detail information sent by the control point; receiving, by the control point, a connection request acceptance message sent by the target user equipment, where the connection request acceptance message includes a guidance identifier selected by a user; and sending, by the control point, corresponding detail information to the target user equipment according to the guidance identifier included in the connection request acceptance message; wherein the control point is a device that actively sends a connection request, the target user equipment is a point-to-point communication device with the same protocol as that of the control point; the guidance identifier comprises at least one item of following information: a title, a number, index information, digest information, and a key word of information that needs to be guided; and the detail information comprises at least one item of the following: location information, attribute information, usage information, and contact information.

An embodiment of the present invention provides an information sending method, including:
receiving, by a user equipment, a connection request sent by a control point, where the connection request includes a guidance identifier, and the guidance identifier is used to request the user equipment to receive detail information sent by the control point; displaying, by the user equipment, the guidance identifier to a user, and receiving the guidance identifier selected by the user; sending, by the user equipment, a connection request acceptance message to the control point, where the connection request acceptance message includes the guidance identifier selected by the user; and receiving, by the user equipment, the detail information sent by the control point; wherein the control point is a device that actively sends a connection request, the target user equipment is a point-to-point communication device with the same protocol as that of the control point; the guidance identifier comprises at least one item of following information: a title, a number, index information, digest information, and a key word of information that needs to be guided; and the detail information comprises at least one item of the following: location information, attribute information, usage information, and contact information.

An embodiment of the present invention provides a terminal device being a control point, including:
a connection request sending unit, configured to send a connection request to a target user equipment, where the connection request includes a guidance identifier, so as to request the target user equipment to receive detail information that is sent by the terminal device and corresponds to the guidance identifier; a connection request acceptance message receiving unit, configured to receive a connection request acceptance message sent by the target user equipment, where the connection request acceptance message includes the guidance identifier selected by a user; and an information sending unit, configured to send corresponding detail information to the target user equipment according to the guidance identifier included in the connection request acceptance message; wherein the control point is a device that actively sends a connection request, the target user equipment is a point-to-point communication device with the same protocol as that of the control point; the guidance identifier comprises at least one item of the following information: a title, a number, index information, digest information, and a key word of information that needs to be guided; and the detail information comprises at least one item of the following: location information, attribute information, usage information, and contact information.

An embodiment of the present invention provides a terminal device, being a target user equipment, including:
a connection request receiving unit, configured to receive a connection request sent by a control point, where the connection request includes a guidance identifier, and the guidance identifier is used to request a user equipment to receive detail information sent by the control point; a user interface displaying unit, configured to display the guidance identifier to a user, and receive the guidance identifier selected by the user; a connection request acceptance message sending unit, configured to send a connection request acceptance message to the control point, where the connection request acceptance message includes the guidance identifier selected by the user; and a detail information receiving unit, configured to receive the detail information sent by the control point; wherein the control point is a device that actively sends a connection request, the target user equipment is a point-to-point communication device with the same protocol as that of the control point; the guidance identifier comprises at least one item of the following information: a title, a number, index information, digest information, and a key word of information that needs to be guided; and the detail information comprises at least one item of the following: location information, attribute information, usage information, and contact information.

Through the embodiments of the present invention, a control point sends a connection request to a target user equipment; includes a guidance identifier in the connection request by using a characteristic of point-to-point communication, to attract the target user equipment to be interested in the guidance identifier to establish a further connection; and sends detail information to the target user equipment after the connection is established, thereby implementing information guidance for a user by the control point. In the embodiments of the present invention, the point-to-point communication is used to transmit detail information to a user equipment, so that the information guidance does not depend on consumption of data service traffic or positioning accuracy of the user equipment.

### BRIEF DESCRIPTION OF THE DRAWINGS

To illustrate the technical solutions in the embodiments of the present invention or in the prior art more clearly, the accompanying drawings required for describing the embodiments or the prior art are introduced briefly in the following. Apparently, the accompanying drawings in the following description merely show some embodiments of the present invention, and persons of ordinary skill in the art may still derive other drawings from these accompanying drawings without creative efforts.
FIG. 1 is a flow chart of an information sending method according to an embodiment of the present invention;
FIG. 2 is a flow chart of another information sending method according to an embodiment of the present invention;
FIG. 3 is a flow chart of a commodity information sending method according to an application embodiment of the present invention;
FIG. 4 is a schematic structural diagram of a terminal device according to an embodiment of the present invention; and
FIG. 5 is a schematic structural diagram of another terminal device according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative efforts shall fall within the protection scope of the present invention.

### Method Embodiment

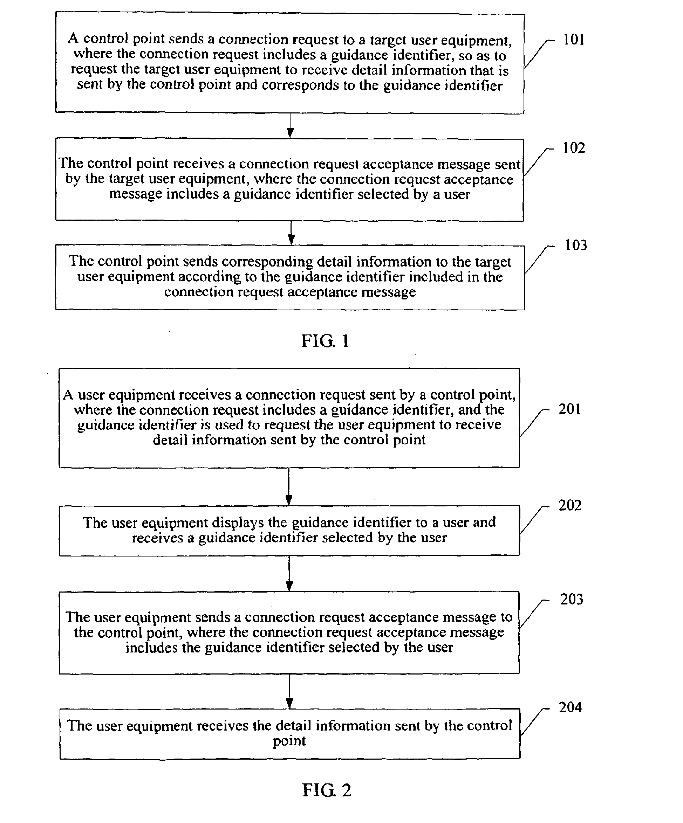

An embodiment of the present invention provides an information sending method, which may be used in a point-to-point communication system, for example, a communication system based on a wireless fidelity (Wireless Fidelity, WiFi) Direct technology. The method is a method performed by a device that supports point-to-point communication, where the device that supports point-to-point communication is a device that has a point-to-point communication function, for example, a device that has a WiFi Direct function or a device that has a bluetooth function. FIG. 1 is a flow chart of the method according to this embodiment of the present invention, and the method includes:
Step 101: A control point sends a connection request to a target user equipment, where the connection request includes a guidance identifier, so as to request the target user equipment to receive detail information that is sent by the control point and corresponds to the guidance identifier.

It can be understood that, a device that supports point-to-point communication may actively send a connection request to a target user equipment. In this embodiment of the present invention, a device that actively sends a connection request is called a control point. A target user equipment is a point-to-point communication device with the same protocol as that of the control point. Point-to-point communication means that a connection may be directly established between two devices and data may be transmitted between the two devices. For example, communication between the two devices may be implemented through the bluetooth, infrared ray, or WiFi Direct, and so on.

The control point may send a connection request to one or multiple target user equipments, to request the target user equipment to establish a point-to-point connection with the control point. The connection request may include identifier information of the control point, an identifier of the target user equipment, a guidance identifier of information (for example, when this embodiment of the present invention is applied in business promotion, guidance information may be commodities on sale, or new commodities, and so on) that needs to be guided. The guidance identifier is used to uniquely identify the guidance information. Specifically, the guidance identifier may be information such as a title, a number, index information, digest information, or a key word of the guidance information.

After receiving the connection request, the target user equipment may provide a user interface for a user, where the user interface includes a guidance identifier. If the user is interested in the guidance identifier, the user may select the guidance identifier. An option for refusing to be connected may further be included on the user interface. If the user is uninterested in the guidance identifier, the user may select information for refusing to be connected with the control point. In this way, the target user equipment does not establish a connection with the control point, thereby effectively protecting user information security and improving user experience.
Step 102: The control point receives a connection request acceptance message sent by the target user equipment, where the connection request acceptance message includes a guidance identifier selected by a user.

After receiving the connection request acceptance message, the control point establishes a point-to-point connection with the target user equipment.
Step 103: The control point sends corresponding detail information to the target user equipment according to the guidance identifier included in the connection request acceptance message.

The control point may find, in preset correspondence between a guidance identifier and detail information, detail information that corresponds to the guidance identifier included in the connection request acceptance message, and send the detail information to the target user equipment. The detail information refers to information that needs to be guided, and may specifically include at least one item of the following: location information, attribute information, usage information, contact information, and so on. For example, when this embodiment of the present invention is applied in business promotion, the detail information may be information such as commodity location information, commodity attribute information, commodity usage information, and commodity contact information.

Specifically, correspondence between the guidance identifier and the detail information is preset in the control point. When the detail information is sent, corresponding detail information may be found according to the guidance identifier that is selected by the user and included in the connection request acceptance message in step 102, where the found detail information may be in the form of a file, or a video, and so on; and the found detail information (that is, the file or the video) is sent to the target user equipment through a point-to-point communication protocol.

It can be seen that, in the method in this embodiment of the present invention, a control point actively sends a connection request to a target user equipment, and includes a guidance identifier in the connection request, so as to request the target user equipment to receive detail information that is sent by the control point and corresponds to the guidance identifier, after the target user equipment receives the connection request sent by the control point, a point-to-point connection is established between the control point and the target user equipment, and the control point may send detail information that corresponds to a guidance identifier selected by a user to the target user equipment, thereby implementing information guidance for the user by the control point. In this embodiment of the present invention, point-to-point communication is used to transmit detail guidance information to a user equipment, so that information guidance does not depend on consumption of data service traffic or positioning accuracy of the user equipment.

In this embodiment, the control point may actively send a guidance identifier for identifying guidance information to the user equipment through the connection request, which may facilitate guidance for the user by the control point and promotion of information. If this embodiment of the present invention is applied in business promotion, the solution may facilitate promotion of a certain commodity by a merchant. In addition, because the point-to-point communication is limited by a distance, only a user equipment in a range that the control point performs point-to-point communication is connected with the control point to receive detail information, and not any user equipment can receive the connection request. This characteristic is applicable to data guidance for a user in a certain territorial range. In another aspect, during the point-to-point communication, the target user equipment may know a purpose of initiating a connection by the control point, and may perform corresponding selection according to the guidance identifier in the connection request.

Optionally, in a specific embodiment, before performing the foregoing step 101, the control point may first search for a user equipment that can support point-to-point communication, and determine the user equipment found through searching as a target user equipment. Specifically, during searching, the control point may broadcast a search request. If an equipment returns a response to the search request, the control point determines the user equipment as a target user equipment, where the user equipment returns the response. Because the point-to-point communication is real-time and is limited by a distance, when the control point searches for another user equipment for point-to-point communication, the search can be performed only in a preset range, that is, in a range of point-to-point communication performed by the control point.

An embodiment of the present invention further provides an information sending method, which may be used in a point-to-point communication system. The method is a method performed by a device that supports point-to-point communication, that is, a method performed by the foregoing target user equipment. FIG. 2 is a flow chart of the method according to this embodiment of the present invention, and the method includes:
Step 201: A user equipment receives a connection request sent by a control point, where the connection request includes a guidance identifier, and the guidance identifier is used to request the user equipment to receive detail information sent by the control point.

It can be understood that, the control point may search, in a preset range, for a user equipment that has the same point-to-point communication protocol as that of the control point, use the user equipment found through searching as a target user equipment, and send a connection request to one or multiple target user equipments. The connection request includes a guidance identifier, and optionally, may further include a control point identifier, a user equipment identifier, and so on. The guidance identifier is used to identify information that needs to be guided, and specifically, the guidance identifier may be a title, a number, index information, digest information, or a key word of guidance information. For example, when this embodiment of the present invention is applied in business promotion, the guidance information may be information about new commodities or commodities on sale.
Step 202: The user equipment displays the guidance identifier to a user and receives a guidance identifier selected by the user; and optionally, the user equipment may provide a user interface, where the guidance identifier in the connection request is included on the user interface, and is provided for the user to select to establish a point-to-point connection with the control point.

After receiving the connection request, the user equipment parses the connection request and provides a user interface, where the user interface includes a guidance identifier. If the user is interested in the guidance identifier, the user may select the guidance identifier. An option for refusing to be connected may further be included on the user interface. If the user is uninterested in the guidance identifier, the user may select to information for refusing to be connected with the control point. In this way, the target user equipment does not establish a connection with the control point, thereby effectively protecting user information security and improving user experience.
Step 203: The user equipment sends a connection request acceptance message to the control point, where the connection request acceptance message includes the guidance identifier selected by the user.
Step 204: The user equipment receives the detail information sent by the control point.

After establishing a point-to-point connection with the control point, the user equipment may receive detail information that is sent by the control point through a point-to-point communication protocol, where the detail information refers to one or multiple of the following: location information, attribute information, usage information, contact information, and so on. For example, when this embodiment of the present invention is applied in business promotion, the detail information may be information such as commodity location information, commodity attribute information, commodity usage information, and commodity contact information. Moreover, the detail information may be transmitted in the form of a file, or a video, and so on.

It can be seen that, in the method in this embodiment of the present invention, a user equipment receives a connection request sent by a control point and provides a user interface, where a guidance identifier included in the connection request is included on the user interface, and is provided for a user to select a guidance identifier and to establish a point-to-point connection with the control point; and after the point-to-point connection is established between the control point and the user equipment, the control point may send detail information that corresponds to the guidance identifier selected by the user to the user equipment, thereby implementing information guidance for the user by the control point. In this embodiment of the present invention, point-to-point communication is used to transmit the detail information to the user equipment, so that information guidance does not depend on consumption of data service traffic or positioning accuracy of the user equipment.

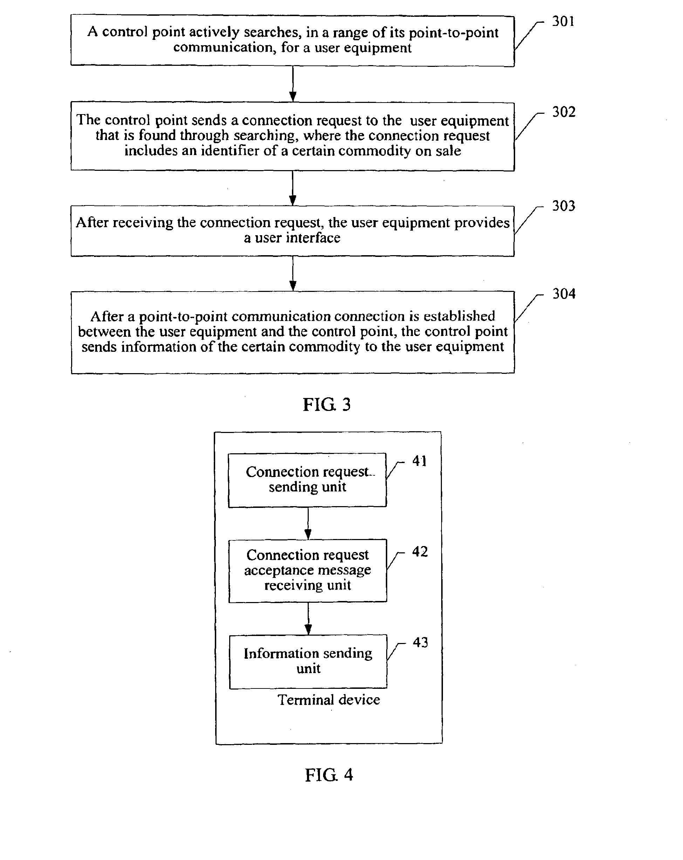

An information sending method is described in detail in the following with reference to a specific embodiment. This embodiment is used in a WiFi Direct communication system. A control point is a device that has a WiFi Direct function and is deployed by a merchant, and a user equipment is a device that has a WiFi Direct function and is used by a user. In this embodiment, guidance information is commodity information, that is, a guidance identifier is a commodity identifier, and detail information is commodity detail information. FIG. 3 is a flow chart of the method, and the method includes:
Step 301: A control point actively searches, in a range of its WiFi point-to-point communication, for a user equipment that has a WiFi Direct function, and uses the user equipment that is found through searching and has a WiFi Direct function as a target user equipment.
Step 302: The control point sends commodity information to the user equipment through a push button (Push Button) manner, and specifically, the control point sends a connection request to the target user equipment, where the connection request includes an identifier of a certain commodity 1 on sale.
Step 303: After receiving the connection request, the user equipment provides a user interface, where the user interface includes information "A certain commodity 1 is on sale. Do you need to view details?", and further includes information whether it needs to be connected to the control point for a user to select.

If a user is interested in the commodity 1, the user may select information that it needs to be connected to the control point, and the user equipment establishes a WiFi Direct connection with the control point according to user selection. The user may also select information that it does not need to be connected to the control point.
Step 304: After a point-to-point communication connection is established between the user equipment and the control point, the control point sends detail information of the certain commodity 1 to the user equipment, for example, information such as a location in a store, a commodity introduction, and contact information of the commodity 1.

### Apparatus Embodiment

An embodiment of the present invention further provides a terminal device, that is, a device that has a point-to-point communication function, for example, a device that has a WiFi Direct function, used as the control point in the foregoing method embodiment. A schematic structural diagram is shown in FIG. 4. The terminal device includes:
a connection request sending unit 41, configured to send a connection request to a target user equipment, where the connection request includes a guidance identifier, so as to request the target user equipment to receive detail information that is sent by the terminal device and corresponds to the guidance identifier;
a connection request acceptance message receiving unit 42, configured to receive a connection request acceptance message sent by the target user equipment, where the connection request acceptance message includes a guidance identifier selected by a user; and
an information sending unit 43, configured to send corresponding detail information to the target user equipment according to the guidance identifier included in the connection request acceptance message, where the information sending unit 43 includes:
an information finding subunit 431, configured to find, in preset correspondence between a guidance identifier and detail information, detail information that corresponds to the guidance identifier included in the connection request acceptance message; and
an information sending subunit 432, configured to send the detail information to the target user equipment.

Optionally, the terminal device may further include:
a searching unit 44, configured to search for a user equipment that supports point-to-point communication; and
a target user equipment determining unit 45, configured to determine the user equipment found through searching as a target user equipment.

The guidance identifier includes at least one item of the following information: a title, a number, index information, digest information, and a key word of information that needs to be guided.

The detail information includes at least one item of the following: location information, attribute information, usage information, and contact information.

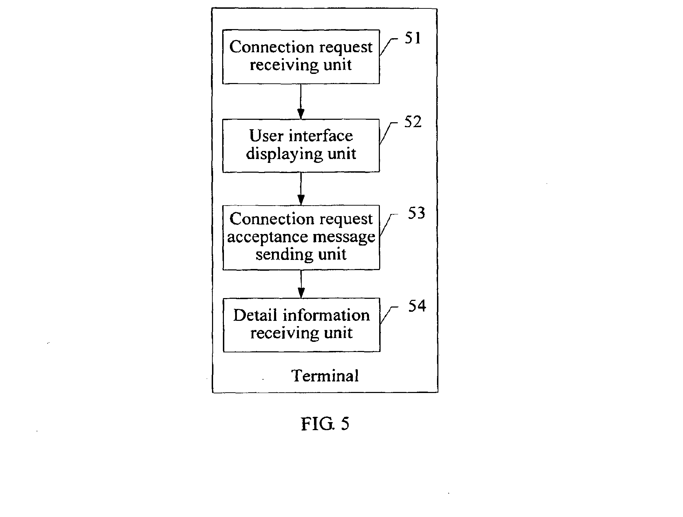

An embodiment of the present invention further provides a terminal device, that is, a device that has a point-to-point communication function, for example, a device that has a WiFi Direct function, used as the user equipment in the foregoing method embodiment. A schematic structural diagram is shown in FIG 5. The terminal device includes:
a connection request receiving unit 51, configured to receive a connection request sent by a control point, where the connection request includes a guidance identifier, and the guidance identifier is used to request a user equipment to receive detail information sent by the control point;
a user interface displaying unit 52, configured to display the guidance identifier to a user, and receive a guidance identifier selected by the user;
a connection request acceptance message sending unit 53, configured to send a connection request acceptance message to the control point, where the connection request acceptance message includes the guidance identifier selected by the user; and
a detail information receiving unit 54, configured to receive the detail information sent by the control point.

The guidance identifier includes at least one item of the following information: a title, a number, index information, digest information, or a key word of information that needs to be guided.

The detail information includes at least one item of the following: location information, attribute information, usage information, and contact information.

### System Embodiment

An embodiment of the present invention provides an information sending system, which is used to complete information sending by using the device described in the apparatus embodiment of the present invention according to the method provided in the method embodiment of the present invention. The system includes: a control point and at least one user equipment, where
the control point is configured to send a connection request to the user equipment, where the connection request includes a guidance identifier, so as to request the user equipment to receive detail information that is sent by the control point and corresponds to the guidance identifier; and after receiving a connection request acceptance message sent by the user equipment, send detail information that corresponds to a guidance identifier to the user equipment, where the guidance identifier is included in the connection request acceptance message; and
the user equipment is configured to: receive the connection request sent by the control point; provide a user interface, where the user interface includes the guidance identifier included in the connection request; receive a guidance identifier selected by a user; send the connection request acceptance message to the control point; and receive detail information that is sent by the control point and corresponds to the guidance identifier selected by the user.

It shall be understood that, units in the apparatus embodiment of the present invention may be implemented in a software or hardware manner, which is not limited in the embodiments of the present invention; and functions/operations completed by the units correspond to procedures in the method embodiment of the present invention respectively, which are not described in detail herein again for brevity.

Persons of ordinary skill in the art may understand that all or a part of the steps of the methods according to the embodiments of the present invention may be implemented by a program instructing relevant hardware. The program may be stored in a computer readable storage medium. The storage medium may include a read-only memory (ROM), a random-access memory (RAM), a magnetic disk, or an optical disk, and so on.

The information sending method, system and relevant device provided in the embodiments of the present invention are described in detail in the foregoing. The principle and implementation manner of the present invention are described in this specification through specific examples. The description of the foregoing embodiments is merely provided for helping understand the method and core ideas of the present invention. Meanwhile, persons of ordinary skill in the art may make variations to the specific implementation manner. In sum, content of the specification shall not be construed as a limitation to the present invention.

## Claims

1. An information sending method, comprising:
sending (101), by a control point, a connection request to a target user equipment, wherein the connection request comprises a guidance identifier, so as to request the target user equipment to receive detail information sent by the control point;
receiving (102), by the control point, a connection request acceptance message sent by the target user equipment, wherein the connection request acceptance message comprises the guidance identifier selected by a user; and
sending (103), by the control point, corresponding detail information to the target user equipment according to the guidance identifier comprised in the connection request acceptance message;
wherein the control point is a device that actively sends a connection request, the target user equipment is a point-to-point communication device with the same protocol as that of the control point;
the guidance identifier comprises at least one item of following information: a title, a number, index information, digest information, and a key word of information that needs to be guided; and
the detail information comprises at least one item of the following: location information, attribute information, usage information, and contact information.

2. The method according to claim 1, wherein the sending, by the control point, corresponding detail information to the target user equipment comprises:
finding, by the control point, in preset correspondence between a guidance identifier and detail information, detail information that corresponds to the guidance identifier comprised in the connection request acceptance message; and
sending, by the control point, the detail information to the target user equipment.

3. The method according to claim 1 or 2, wherein before the sending, by a control point, a connection request to a target user equipment, the method further comprises:
searching, by the control point, for a user equipment that supports point-to-point communication; and
determining, by the control point, the user equipment found through searching as a target user equipment.

4. An information sending method, comprising:
receiving (201), by a user equipment, a connection request sent by a control point, wherein the connection request comprises a guidance identifier, and the guidance identifier is used to request the user equipment to receive detail information sent by the control point;
displaying (202), by the user equipment, the guidance identifier to a user, and receiving the guidance identifier selected by the user;
sending (203), by the user equipment, a connection request acceptance message to the control point, wherein the connection request acceptance message comprises the guidance identifier selected by the user; and
receiving (204), by the user equipment, the detail information sent by the control point;
wherein the control point is a device that actively sends a connection request, the target user equipment is a point-to-point communication device with the same protocol as that of the control point;
the guidance identifier comprises at least one item of the following information: a title, a number, index information, digest information, and a key word of information that needs to be guided; and
the detail information comprises at least one item of the following: location information, attribute information, usage information, and contact information.

5. A terminal device, being a control point, comprising:
a connection request sending unit (41), configured to send a connection request to a target user equipment, wherein the connection request comprises a guidance identifier, so as to request the target user equipment to receive detail information that is sent by the terminal device and corresponds to the guidance identifier;
a connection request acceptance message receiving unit (42), configured to receive a connection request acceptance message sent by the target user equipment, wherein the connection request acceptance message comprises the guidance identifier selected by a user; and
an information sending unit (43), configured to send corresponding detail information to the target user equipment according to the guidance identifier comprised in the connection request acceptance message;
wherein the control point is a device that actively sends a connection request, the target user equipment is a point-to-point communication device with the same protocol as that of the control point ;
the guidance identifier comprises at least one item of the following information: a title, a number, index information, digest information, and a key word of information that needs to be guided; and
the detail information comprises at least one item of the following: location information, attribute information, usage information, and contact information

6. The terminal device according to claim 5, wherein the information sending unit comprises:
an information finding subunit, configured to find, in preset correspondence between a guidance identifier and detail information, detail information that corresponds to the guidance identifier comprised in the connection request acceptance message; and
an information sending subunit, configured to send the detail information to the target user equipment.

7. The terminal device according to claim 5 or 6, wherein the terminal device further comprises:
a searching unit, configured to search for a user equipment that supports point-to-point communication; and
a target user equipment determining unit, configured to determine the user equipment found through searching as a target user equipment.

8. A terminal device, being a target user equipment, comprising:
a connection request receiving unit (51), configured to receive a connection request sent by a control point, wherein the connection request comprises a guidance identifier, and the guidance identifier is used to request a user equipment to receive detail information sent by the control point;
a user interface displaying unit (52), configured to display the guidance identifier to a user, and receive the guidance identifier selected by the user;
a connection request acceptance message sending unit (53), configured to send a connection request acceptance message to the control point, wherein the connection request acceptance message comprises the guidance identifier selected by the user; and
a detail information receiving unit (54), configured to receive the detail information sent by the control point;
wherein the control point is a device that actively sends a connection request, the target user equipment is a point-to-point communication device with the same protocol as that of the control point;
the guidance identifier comprises at least one item of the following information: a title, a number, index information, digest information, and a key word of information that needs to be guided; and
the detail information comprises at least one item of the following: location information, attribute information, usage information, and contact information.

## Patentansprüche

1. Informationssendeverfahren, das die folgenden Schritte aufweist:
Senden (101) durch einen Kontrollpunkt eine Verbindungsanforderung an ein Zielbenutzergerät, wobei die Verbindungsanforderung eine Leitkennung aufweist, um das Zielbenutzergerät aufzufordern, Detailinformationen zu empfangen, die durch den Kontrollpunkt gesendet werden;
Empfangen (102) durch den Kontrollpunkt einer Verbindungsanforderungsannahmenachricht, die durch das Zielbenutzergerät gesendet wird, wobei die Verbindungsanforderungsannahmenachricht die durch einen Benutzer ausgewählte Leitkennung aufweist; und
Senden (103) durch den Kontrollpunkt von entsprechenden Detailinformationen an das Zielbenutzergerät gemäß der Leitkennung, die in der Verbindungsanforderungsannahmenachricht enthalten ist;
wobei der Kontrollpunkt eine Vorrichtung ist, die aktiv eine Verbindungsanforderung sendet, das Zielbenutzergerät eine Punkt-zu-Punkt-Kommunikationsvorrichtung mit demselben Protokoll wie der Kontrollpunkt ist;
die Leitkennung mindestens ein Element der folgenden Informationen aufweist: einen Titel, eine Zahl, Inhaltsverzeichnisinformationen, Kurzfassungsinformationen und ein Stichwort der Informationen, die geleitet werden müssen; und die Detailinformationen mindestens ein Element des Folgenden aufweisen:
Ortsinformationen, Attributinformationen, Nutzungsinformationen und Kontaktinformationen.

2. Verfahren nach Anspruch 1, wobei das Senden von entsprechenden Detailinformationen an das Zielbenutzergerät durch den Kontrollpunkt aufweist:
Finden durch den Kontrollpunkt in einer vorgegebenen Entsprechung zwischen einer Leitkennung und Detailinformationen von Detailinformationen, die der Leitkennung entsprechen, die in der Verbindungsanforderungsannahmenachricht enthalten ist; und Senden durch den Kontrollpunkt der Detailinformationen an das Zielbenutzergerät.

3. Verfahren nach Anspruch 1 oder 2, wobei vor dem Senden durch einen Kontrollpunkt einer Verbindungsanforderung an ein Zielbenutzergerät das Verfahren ferner aufweist:
Suchen durch den Kontrollpunkt nach einem Benutzergerät, das eine Punkt-zu-Punkt-Kommunikation unterstützt; und
Bestimmen durch den Kontrollpunkt des durch das Suchen gefundenen Benutzergeräts als ein Zielbenutzergerät.

4. Informationssendeverfahren, das die folgenden Schritte aufweist:
Empfangen (201) durch ein Benutzergerät einer durch einen Kontrollpunkt gesendeten Verbindungsanforderung, wobei die Verbindungsanforderung eine Leitkennung aufweist, und die Leitkennung verwendet wird, um das Benutzergerät aufzufordern, Detailinformationen zu empfangen, die durch den Kontrollpunkt gesendet werden;
Anzeigen (202) der Leitkennung durch das Benutzergerät einem Benutzer, und Empfangen der durch den Benutzer ausgewählten Leitkennung;
Senden (203) durch das Benutzergerät einer Verbindungsanforderungsannahmenachricht an den Kontrollpunkt, wobei die Verbindungsanforderungsannahmenachricht die durch den Benutzer ausgewählte Leitkennung aufweist; und
Empfangen (204) durch das Benutzergerät der durch den Kontrollpunkt gesendeten Detailinformationen,
wobei der Kontrollpunkt eine Vorrichtung ist, die aktiv eine Verbindungsanforderung sendet, das Zielbenutzergerät eine Punkt-zu-Punkt-Kommunikationsvorrichtung mit demselben Protokoll wie der Kontrollpunkt ist;
die Leitkennung mindestens ein Element der folgenden Informationen aufweist: einen Titel, eine Zahl, Inhaltsverzeichnisinformationen, Kurzfassungsinformationen und ein Stichwort der Informationen, die geleitet werden müssen; und
die Detailinformationen mindestens ein Element des Folgenden aufweisen: Ortsinformationen, Attributinformationen, Nutzungsinformationen und Kontaktinformationen.

5. Endgerätevorrichtung, die ein Kontrollpunkt ist, die Folgendes aufweist:
eine Verbindungsanforderungssendeeinheit (41), die konfiguriert ist, eine Verbindungsanforderung an ein Zielbenutzergerät zu senden, wobei die Verbindungsanforderung eine Leitkennung aufweist, um das Zielbenutzergerät aufzufordern, Detailinformationen zu empfangen, die durch die Endgerätevorrichtung gesendet werden und der Leitkennung entsprechen;
eine Verbindungsanforderungsannahmenachrichtenempfangseinheit (42), die konfiguriert ist, eine Verbindungsanforderungsannahmenachricht zu empfangen, die durch das Zielbenutzergerät gesendet wird, wobei die Verbindungsanforderungsannahmenachricht die durch einen Benutzer ausgewählte Leitkennung aufweist; und
eine Informationssendeeinheit (43), die konfiguriert ist, entsprechende Detailinformationen an das Zielbenutzergerät gemäß der Leitkennung zu senden, die in der Verbindungsanforderungsannahmenachricht enthalten ist;
wobei der Kontrollpunkt eine Vorrichtung ist, die aktiv eine Verbindungsanforderung sendet, das Zielbenutzergerät eine Punkt-zu-Punkt-Kommunikationsvorrichtung mit demselben Protokoll wie der Kontrollpunkt ist;
die Leitkennung mindestens ein Element der folgenden Informationen aufweist: einen Titel, eine Zahl, Inhaltsverzeichnisinformationen, Kurzfassungsinformationen und ein Stichwort der Informationen, die geleitet werden müssen; und
die Detailinformationen mindestens ein Element des Folgenden aufweisen: Ortsinformationen, Attributinformationen, Nutzungsinformationen und Kontaktinformationen.

6. Endgerätevorrichtung nach Anspruch 5, wobei die Informationssendeeinheit aufweist:
eine Informationsfindungsuntereinheit, die konfiguriert ist, in einer vorgegebenen Entsprechung zwischen einer Leitkennung und Detailinformationen Detailinformationen zu finden, die der Leitkennung entsprechen, die in der Verbindungsanforderungsannahmenachricht enthalten ist; und
eine Informationssendeuntereinheit, die konfiguriert ist, die Detailinformationen an das Zielbenutzergerät zu senden.

7. Endgerätevorrichtung nach Anspruch 5 oder 6, wobei die Endgerätevorrichtung ferner aufweist:
eine Sucheinheit, die konfiguriert ist, nach einem Benutzergerät zu suchen, das eine Punkt-zu-Punkt-Kommunikation unterstützt; und
eine Zielbenutzergerätbestimmungseinheit, die konfiguriert ist, das durch das Suchen gefundene Benutzergerät als Zielbenutzergerät zu bestimmen.

8. Endgerätevorrichtung, die Zielbenutzergerät ist, die Folgendes aufweist:
eine Verbindungsanforderungsempfangseinheit (51), die konfiguriert ist, eine Verbindungsanforderung zu empfangen, die durch einen Kontrollpunkt gesendet wird, wobei die Verbindungsanforderung eine Leitkennung aufweist und die Leitkennung verwendet wird, ein Benutzergerät aufzufordern, Detailinformationen zu empfangen, die durch den Kontrollpunkt gesendet werden;
eine Benutzerschnittstellenanzeigeeinheit (52), die konfiguriert ist, die Leitkennung einem Benutzer anzuzeigen, und die durch den Benutzer ausgewählte Leitkennung zu empfangen;
eine Verbindungsanforderungsannahmenachrichtensendeeinheit (53), die konfiguriert ist, eine Verbindungsanforderungsannahmenachricht an den Kontrollpunkt zu senden, wobei die Verbindungsanforderungsannahmenachricht die durch den Benutzer ausgewählte Leitkennung aufweist; und
eine Detailinformationsempfangseinheit (54), die konfiguriert ist, die durch den Kontrollpunkt gesendeten Detailinformationen zu empfangen;
wobei der Kontrollpunkt eine Vorrichtung ist, die aktiv eine Verbindungsanforderung sendet, das Zielbenutzergerät eine Punkt-zu-Punkt-Kommunikationsvorrichtung mit demselben Protokoll wie der Kontrollpunkt ist;
die Leitkennung mindestens ein Element der folgenden Informationen aufweist: einen Titel, eine Zahl, Inhaltsverzeichnisinformationen, Kurzfassungsinformationen und ein Stichwort der Informationen, die geleitet werden müssen; und
die Detailinformationen mindestens ein Element des Folgenden aufweisen: Ortsinformationen, Attributinformationen, Nutzungsinformationen und Kontaktinformationen.

## Revendications

1. Procédé d'envoi d'informations, comprenant :
l'envoi (101), par un point de commande, d'une requête de connexion à un équipement utilisateur cible, la requête de connexion comprenant un identifiant de guidage, de manière à demander à l'équipement utilisateur cible de recevoir des informations détaillées envoyées par le point de commande ;
la réception (102), par le point de commande, d'un message d'acceptation de requête de connexion envoyé par l'équipement utilisateur cible, le message d'acceptation de requête de connexion comprenant l'identifiant de guidage sélectionné par un utilisateur ; et
l'envoi (103), par le point de commande, d'informations détaillées correspondantes à l'équipement utilisateur cible en fonction de l'identifiant de guidage compris dans le message d'acceptation de requête de connexion ;
dans lequel le point de commande est un dispositif qui envoie activement une requête de connexion, l'équipement utilisateur cible est un dispositif de communication point à point ayant le même protocole que celui du point de commande ;
l'identifiant de guidage comprend au moins un élément des informations suivantes :
un titre, un nombre, une information d'indice, une information de condensé, et un mot clé d'information qui doit être guidée ; et
les informations détaillées comprennent au moins un élément des informations suivantes : information de position, information d'attribut, information d'utilisation et information de contact.

2. Procédé selon la revendication 1, dans lequel l'envoi, par le point de commande, d'informations détaillées correspondantes à l'équipement utilisateur cible comprend :
l'obtention, par le point de commande, dans une correspondance préétablie entre un identifiant de guidage et des informations détaillées, d'informations détaillées qui correspondent à l'identifiant de guidage compris dans le message d'acceptation de requête de connexion ; et
l'envoi, par le point de commande, des informations détaillées à l'équipement utilisateur cible.

3. Procédé selon la revendication 1 ou 2, comprenant en outre avant l'envoi, par un point de commande, d'une requête de connexion à un équipement utilisateur cible :
la recherche, par le point de commande, d'un équipement utilisateur qui supporte la communication point à point ; et
la détermination, par le point de commande, de l'équipement utilisateur trouvé par recherche comme équipement utilisateur cible.

4. Procédé d'envoi d'informations, comprenant :
la réception (201), par un équipement utilisateur, d'une requête de connexion envoyée par un point de commande, la requête de connexion comprenant un identifiant de guidage, et l'identifiant de guidage servant à demander à l'équipement utilisateur de recevoir des informations détaillées envoyées par le point de commande ;
l'affichage (202), par l'équipement utilisateur, de l'identifiant de guidage à un utilisateur, et la réception de l'identifiant de guidage sélectionné par l'utilisateur ;
l'envoi (203), par l'équipement utilisateur, d'un message d'acceptation de requête de connexion au point de commande, le message d'acceptation de requête de connexion comprenant l'identifiant de guidage sélectionné par l'utilisateur ; et
la réception (204), par l'équipement utilisateur, des informations détaillées envoyées par le point de commande ;
dans lequel le point de commande est un dispositif qui envoie activement une requête de connexion, l'équipement utilisateur cible est un dispositif de communication point à point ayant le même protocole que celui du point de commande ;
l'identifiant de guidage comprend au moins un élément des informations suivantes :
un titre, un nombre, une information d'indice, une information de condensé, et un mot clé d'information qui doit être guidée ; et
les informations détaillées comprennent au moins un élément des informations suivantes : information de position, information d'attribut, information d'utilisation et
information de contact.

5. Dispositif terminal, étant un point de commande, comprenant :
une unité d'envoi de requête de connexion (41), configurée pour envoyer une requête de connexion à un équipement utilisateur cible, la requête de connexion comprenant un identifiant de guidage, de manière à demander à l'équipement utilisateur cible de recevoir des informations détaillées qui sont envoyées par le dispositif terminal et qui correspondent à l'identifiant de guidage ;
une unité de réception de message d'acceptation de requête de connexion (42), configurée pour recevoir un message d'acceptation de requête de connexion envoyé par l'équipement utilisateur cible, le message d'acceptation de requête de connexion comprenant l'identifiant de guidage sélectionné par un utilisateur ; et
une unité d'envoi d'informations (43), configurée pour envoyer des informations détaillées correspondantes à l'équipement utilisateur cible en fonction de l'identifiant de guidage compris dans le message d'acceptation de requête de connexion ;
dans lequel le point de commande est un dispositif qui envoie activement une requête de connexion, l'équipement utilisateur cible est un dispositif de communication point à point ayant le même protocole que celui du point de commande ;
l'identifiant de guidage comprend au moins un élément des informations suivantes :
un titre, un nombre, une information d'indice, une information de condensé, et un mot clé d'information qui doit être guidée ; et
les informations détaillées comprennent au moins un élément des informations suivantes : information de position, information d'attribut, information d'utilisation et information de contact.

6. Dispositif terminal selon la revendication 5, dans lequel l'unité d'envoi d'informations comprend :
une sous-unité d'obtention d'informations, configurée pour obtenir, en correspondance préétablie entre un identifiant de guidage et des informations détaillées, des informations détaillées qui correspondent à l'identifiant de guidage compris dans le message d'acceptation de requête de connexion ; et
une sous-unité d'envoi d'informations, configurée pour envoyer les informations détaillées à l'équipement utilisateur cible.

7. Dispositif terminal selon la revendication 5 ou 6, le dispositif terminal comprenant en outre :
une unité de recherche, configurée pour rechercher un équipement utilisateur qui supporte la communication point à point ; et
une unité de détermination d'équipement utilisateur cible, configurée pour déterminer l'équipement utilisateur trouvé par recherche comme équipement utilisateur cible.

8. Dispositif terminal, étant un équipement utilisateur cible, comprenant :
une unité de réception de requête de connexion (51), configurée pour recevoir une requête de connexion envoyée par un point de commande, la requête de connexion comprenant un identifiant de guidage, et l'identifiant de guidage servant à demander à un équipement utilisateur de recevoir des informations détaillées envoyées par le point de commande ;
une unité d'affichage d'interface utilisateur (52), configurée pour afficher l'identifiant de guidage à un utilisateur, et recevoir l'identifiant de guidage sélectionné par l'utilisateur ;
une unité d'envoi de message d'acceptation de requête de connexion (53), configurée pour envoyer un message d'acceptation de requête de connexion au point de commande, le message d'acceptation de requête de connexion comprenant l'identifiant de guidage sélectionné par l'utilisateur ; et
une unité de réception d'informations détaillées (54), configurée pour recevoir les informations détaillées envoyées par le point de commande ;
dans lequel le point de commande est un dispositif qui envoie activement une requête de connexion, l'équipement utilisateur cible est un dispositif de communication point à point ayant le même protocole que celui du point de commande ;
l'identifiant de guidage comprend au moins un élément des informations suivantes :
un titre, un nombre, une information d'indice, une information de condensé, et un mot clé d'information qui doit être guidée ; et
les informations détaillées comprennent au moins un élément des informations suivantes : information de position, information d'attribut, information d'utilisation et information de contact.
